# EUROPEAN PATENT APPLICATION

(11) **EP 4 160 781 A1**
(43) Date of publication of application: **05.04.2023**
(21) Application number: 21902737.2
(22) Date of filing: 10.12.2021
(51) Int. Cl.: H01M 10/0587, H01M 10/0525, H01M 50/457, H01M 50/489

(54) **LITHIUM BATTERY**

(30) Priority: 10.12.2020 CN 202011455854
(71) Applicant: Zhuhai CosMX Battery Co., Ltd., Zhuhai, Guangdong 519180 (CN)
(72) Inventor: ZHAO, Junyi, Zhuhai, Guangdong 519180 (CN); ZOU, Hu, Zhuhai, Guangdong 519180 (CN)
(74) Representative: Vossius & Partner Patentanwälte Rechtsanwälte mbB
(86) International application number: PCT/CN2021/137222
(87) International publication number: WO 2022/122032

(57) **Abstract**

A lithium battery includes a wound core and tabs, in which the wound core is formed by stacking and winding an inner separator, a first electrode sheet, an outer separator, and a second electrode sheet, and the first electrode sheet and the second electrode sheet have opposite polarity; the inner separator is located at the innermost layer of the wound core, and each of the inner separator and the outer separator has a clamping section, a first straight section connected with the clamping section and located behind clamping section, and a tail laminating section extending beyond a tail end of the first electrode sheet; where, the first straight section is located in front of the first electrode sheet, the tail laminating section is a separator end, and the clamping section, the first straight section and the tail laminating section of the inner separator are respectively laminated with the clamping section, the first straight section and the tail laminating section of the outer separator; and the first straight section of the inner separator has a surface friction coefficient of 0.1-0.4. A separator with a specific surface friction coefficient is used in this invention, such that the separator matches with a winding needle material, and production problems such as core pulling and poor spacing that are caused by the separator material can be avoided, which is beneficial to improve product yield and production efficiency.

## Description

This application claims priority to Chinese Patent Application No. 202011455854.0, entitled "Lithium Battery" and filed with the China National Intellectual Property Administration on December 10, 2020, the entire contents of which are incorporated in this application by reference.

### TECHNICAL FIELD

This invention belongs to a technical field of lithium-ion batteries, and in particular relates to a lithium battery.

### BACKGROUND

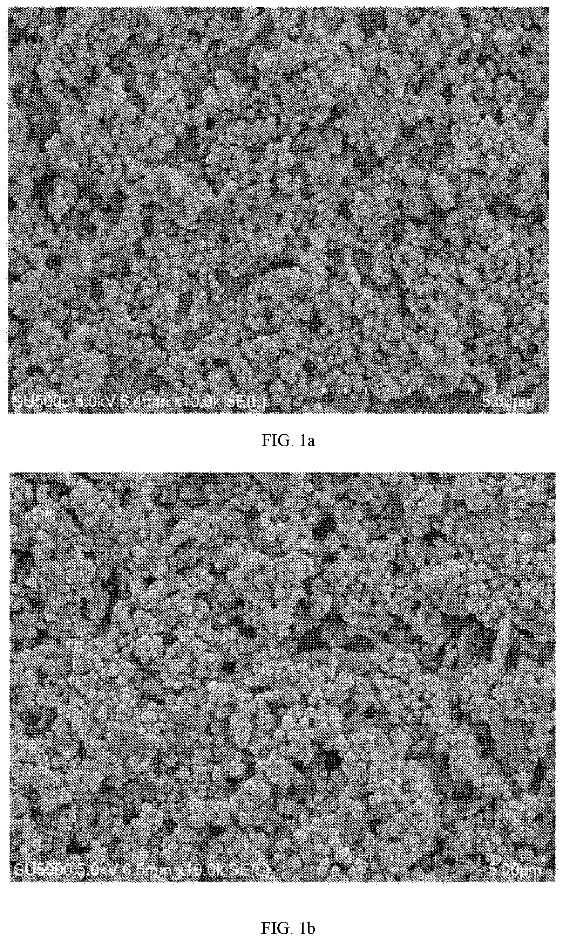

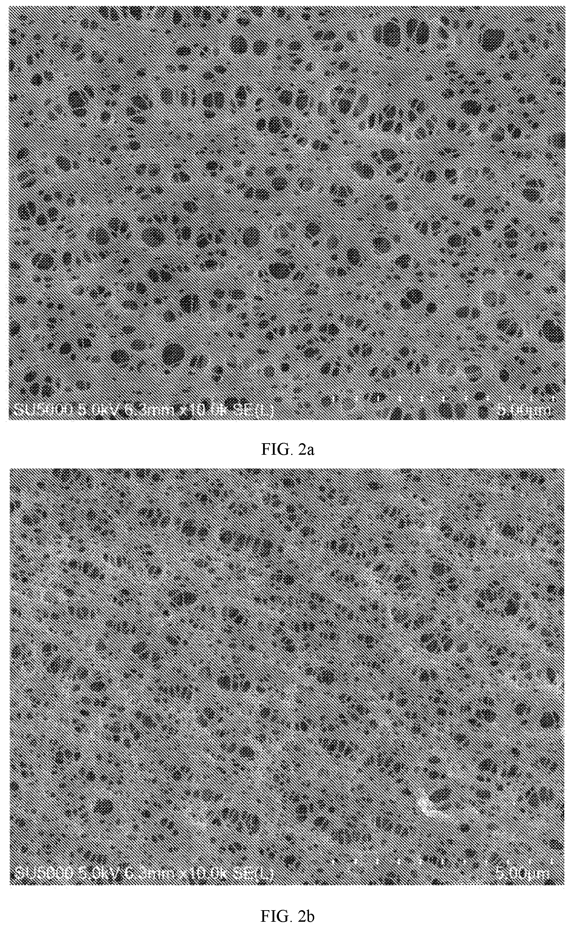

The lithium battery includes a cell and tabs provided on the cell. The cell includes a separator, a positive electrode sheet and a negative electrode sheet. The separator is one of key materials of the lithium battery and is arranged between the positive and negative electrode sheets of the battery for separating the positive and negative electrode sheets to prevent short circuit of the battery. At present, the separators used in the lithium battery are generally polyolefin products with a hole structure, such as PE separator, PP separator, and PP/PE/PP three-layer separator. Inorganic particles, such as alumina particles, boehmite particles, magnesium oxide particles, etc., are coated on one-side or two-side surfaces of substrate separator, and based on this, the separator is subjected to double-sided pure glue coating or coating with mixed glue and ceramic particles to obtain a separator product finally, in which the glue may be a single PVDF or a mixture of multiple PVDFs, and the coating method may be a water-based coating or an oil-based coating. The water-based separator is a finished product obtained by dispersing and grinding a single type of PVDF or multiple types of PVDFs, a dispersing agent and a glue in water to form a suspension, and then coating after filtration; the water-based separator may be coated by means of a micro-concave roll transfer coating or a high-speed nozzle coating. The oil-based separator is a finished product obtained by dissolving a single type of PVDF or multiple types of PVDFs in an organic solvent (such as NMP, DMAC, etc.) according to a specific ratio, and then coating after forming a solution; the oil-based separator may be coated by means of micro-concave roll transfer coating or dip coating. FIGs 1a and 1b are Scanning Electron Microscope (SEM) images of two-side surfaces of the water-based separator coated by a transfer coating method using a micro-concave roller respectively; an adhesive layer on the separator surface has a packing density of 0.6 g/m² to 3.0 g/m², and the water-based separator may also be coated on the surfaces of the substrate and ceramic layer by spraying and other means to form a coating. FIGs 2a and 2b are SEM images of two-side surfaces of the oil-based separator coated by a transfer coating method using a micro- concave roller respectively; an adhesive layer on the separator surface has a packing density of 0.6 g/m² to 3.0 g/m², and the oil-based separator may also be coated on the surfaces of the substrate and ceramic layer by dipping and other means to form a coating.

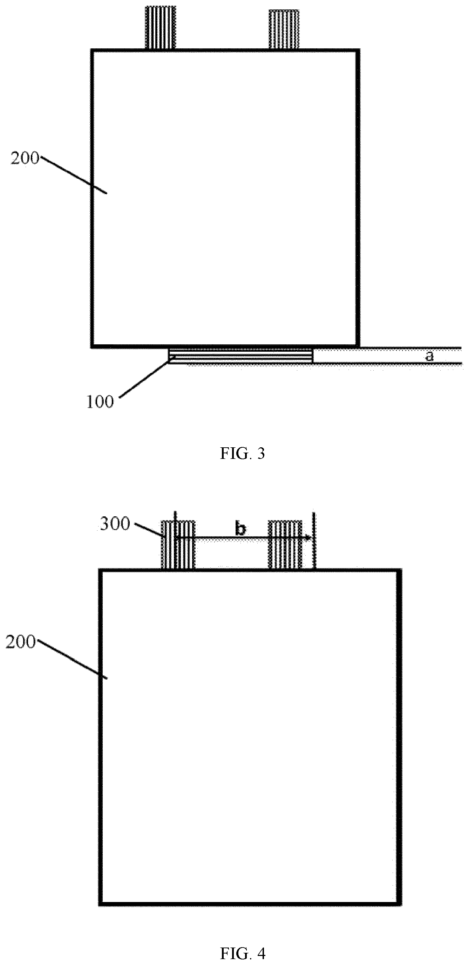

When a wound core of battery is prepared, a winding needle is generally used to clamp the separator, and the separator drives the positive electrode sheet and the negative electrode sheet to rotate together to form the wound core. Since the surface of the separator is coated with a coating, when the separator is in contact with the winding needle, a roughness of the coating on the surface of the separator has an important influence on whether a series of actions in the cell winding process can be successfully completed. If the roughness of the coating on the surface of the separator does not match the surface material of the winding needle, a phenomenon of core pulling or poor spacing between the tabs is prone to occur when the cell is wound. FIG. 3 is a schematic diagram showing the core pulling of the wound core. During the winding process, the separator in the innermost layer is in direct contact with the winding needle. During the pulling of the winding needle, the smooth adsorption (a phenomenon that the separator surface and Teflon surface are directly adsorbed to each other due to their smoothness or the dynamic friction between the separator and the winding needle is relatively large, which will cause the separator 100 to be pulled out of the wound core 200, leading to the core pulling of the wound core. In FIG. 3, "a" represents the length of the part of separator 100 exposed beyond the wound core 200, that is, "a" represents the core pulling distance of the wound core, which is generally expressed in a unit of millimeter. When the condition 0≤a≤0.5 mm is met, the quality of the wound core is considered to be qualified; and when "a" is greater than 0.5 mm, the quality of the core is not considered to be qualified. FIG. 4 is a schematic diagram showing poor spacing between tabs, in which the inner separator may move when the winding needle is pulled out, thereby causing the position of two tabs 300 to shift, making the spacing between two tabs 300 too large or too small. FIG. 4 shows a case where the spacing between two tabs 300 is smaller than a standard distance b (unit: millimeter). The core pulling of the wound core and the poor spacing between tabs will affect the quality of the battery.

### SUMMARY

The purpose of this invention is to provide a lithium battery, which can reduce the phenomenon of poor production such as the core pulling of the wound core and unqualified spacing between tabs, and improve the yield of lithium batteries.

In order to achieve the above purpose, this invention adopts the following technical solutions.

A lithium battery includes a wound core and tabs, in which the wound core is formed by stacking and winding an inner separator, a first electrode sheet, an outer separator, and a second electrode sheet, and the first electrode sheet and the second electrode sheet have opposite polarity; the inner separator is located at the innermost layer of the wound core, and each of the inner separator and the outer separator has a clamping section, a first straight section connected with the clamping section and located behind clamping section, and a tail laminating section extending beyond a tail end of the first electrode sheet; where, the first straight section is located in front of the first electrode sheet, the tail laminating section is a separator end, and the clamping section, the first straight section and the tail laminating section of the inner separator are respectively laminated with the clamping section, the first straight section and the tail laminating section of the outer separator; and the first straight section of the inner separator has a surface friction coefficient of 0.1-0.4.

Further, the surface friction coefficient is a first friction coefficient and/or a second friction coefficient as determined by the following method:
S1: cutting a separator into a separator sample with a suitable size, and wrapping the separator sample around a surface of a mover;
S2: spreading material that is in direct contact with the separator on a measurement area;
S3: placing the mover wrapped with the separator sample in the measurement area, so as to make a surface of the separator sample to be measured in contact with the material on the measurement area;
S4: applying an external force to the mover, and measuring a first friction coefficient of the surface of the separator sample when the mover moves; and
S5: after the mover starts to move, measuring a second friction coefficient of the surface of the separator sample when the mover moves at a constant speed under the external force.

More specifically, the surface friction coefficient is a second friction coefficient between the separator and Teflon.

More specifically, each of the inner separator and the outer separator includes a base film, a ceramic layer and an adhesive layer, and a surface of the base film is provided with the ceramic layer or the adhesive layer, and an outer surface of the ceramic layer is provided with the adhesive layer; a surface of the separator having both the ceramic layer and the adhesive layer is a ceramic surface, and at least one surface of each of the inner separator and the outer separator is a ceramic surface.

More specifically, surfaces of the inner separator and the outer separator that are opposite to each other on the clamping section, the first straight section and the tail laminating section are ceramic surfaces.

More specifically, each of the inner separator and the outer separator includes a base film and an adhesive layer, and a surface of the base film on which the adhesive layer is disposed is an adhesive surface, and at least one surface of each of the inner separator and the outer separator is the adhesive surface.

More specifically, surfaces of the inner separator and the outer separator that are opposite to each other on the clamping section, the first straight section and the tail laminating section are adhesive surfaces.

More specifically, a length of the clamping section of the inner separator and a length of the clamping section of the outer separator are each 1-15% of a width of the wound core; and/or, a length of the first straight section of the inner separator and a length of the first straight section of the outer separator are each 40-50% of the width of the wound core.

More specifically, a length of the tail laminating section of the inner separator and a length of the tail laminating section of the outer separator are both ≥5 mm; and/or, the length of the tail laminating section of the inner separator and the length of the tail laminating section of the outer separator are both 0.1-10% of the width of the wound core.

It can be seen from the above technical solutions that the lithium battery of this invention uses a separator in which the first straight section of the inner separator has a specific friction coefficient, so that the separator material and the winding needle material (Teflon) are matched, and products can be output stably from the winding machine, thereby obtaining a battery structure whose core-pulling distance and spacing between tabs meet the quality requirements, which is conducive to improve product yield and production efficiency. In the steps of determining the friction coefficient, if the friction coefficient is measured with the Teflon material, the compatibility between different materials may also be predicted; for example. If the compatibility between the separator and the Teflon (winding needle) material can be identified in advance, appropriate separator material may be selected before winding, so that the separator is used with the winding needle to avoid production problems such as the core pulling and the poor spacing that are caused by the separator material, and, the winding machine can output products smoothly, thereby improving product yield and production efficiency.

Further, a dry peeling force of each of the first straight section of the inner separator and the first straight section of the outer separator is less than 8 N/m. The dry peeling force is determined by the following steps:
S1: cutting a separator to be tested into separator samples with suitable size and aligning and stacking two pieces of separator samples to be tested;
S2: subjecting stacked separator samples to be tested to a hot-pressing treatment with a hot-pressing temperature of 100°C, a pressure of 0.2 MPa, and a hot-pressing time of 10 s;
S3: after the hot-pressing treatment is completed, separating the separator samples to be tested that are pressed together from one end of the separator samples to be tested, performing a 90° peeling, and recording a peeling force during separation of the separator samples to be tested, in which the peeling force is called the dry peeling force. Preferably, the dry peeling force is a dry peeling force of a ceramic surface of the separator.

Suitable separator material is selected based on the dry peeling force of the separator, so that the separator is matched with a winding needle, and the phenomenon that the electrode sheets are folded after winding, top & side sealing and baking can be reduced, so as to improve the product yield and the quality of finished product. More preferably, the dry peeling force is a dry peeling force of the ceramic surface of the separator. Further, the separator has an adhesive transfer ratio of 20-40%, the adhesive transfer area is a ratio of an adhesive transfer mass to a separator area, and the adhesive transfer mass is calculated by subtracting a separator mass after dry peeling from a separator mass before dry peeling.

Further, the inner separator has a first inner laminating section, and the first inner laminating section of the inner separator is a part where the inner separator is laminated with itself; an adhesive surface of the first inner laminating section of the inner separator has a wet peeling force ≥ 2 N/m, and a ceramic surface of the first inner laminating section of the inner separator has a wet peeling force ≥ 1 N/m, and the wet peel force is determined by the following steps:
S1: cutting a separator to be tested into separator samples with suitable size, and aligning and stacking two pieces of separator samples to be tested;
S2: placing the two pieces of separator samples to be tested that are stacked into laminated aluminum film for packaging, injecting an electrolyte, vacuuming and sealing;
S3: subjecting the sealed laminated aluminum film to a hot-pressing treatment using a formation machine under a temperature of 80°C and a pressure of 0.8 MPa for 2 h;
S4: removing the separator samples to be tested from the laminated aluminum film after the hot-pressing treatment is completed, wiping the electrolyte off the separator samples, placing the wiped separator samples into a hard sealer, and performing a further hot-pressing treatment under a temperature of 100°C and a pressure of 0.2 MPa for 10 s; and
S5: separating the two pieces of separator samples to be tested that are pressed together from one end of the separator samples after the further hot-pressing treatment is completed, performing a 90° peeling, and recording a peeling force during separation of the separator samples to be tested, in which the peeling force is called a wet peeling force.

More specifically, a length of the first inner laminated section of the inner separator is 30-60% of a width of the wound core.

Further, the lithium battery has an overall hardness ≥ 200 N.

Suitable separator material is selected based on the wet peeling force of the separator, so that the separator may have a good bonding effect and form a good bonding with the positive and negative electrode sheets to form a battery with good hardness. Furthermore, the probability of cycle failure of the cell caused by excessive expansion in the later stage of cycle is reduced, which is beneficial to prolong the cycle life.

More specifically, the ceramic layer includes ceramic particles and an adhesive polymer; the ceramic particles are one or more of alumina, boehmite, and magnesia; the adhesive polymer is at least one of polyvinylidene fluoride, polyvinylpyrrolidone, vinylidene fluoride-hexafluoropropylene polymer, polyacrylonitrile, sodium carboxymethyl cellulose, sodium polyacrylate, polyacrylic acid, polyacrylate, styrene-butadiene copolymer, butadiene-acrylonitrile polymer, polyvinyl alcohol, polymethyl acrylate, polymethyl methacrylate, polyethyl acrylate, and polyacrylic acid-styrene polymer.

More specifically, a particle size of the ceramic particles has the following distribution: D10 particle size being 0.15-0.3 µm, D50 particle size being 0.35-0.45 µm, D90 particle size being 0.6-0.8 µm, and D100 particle size being less than 4.5 µm,

More specifically, the adhesive layer includes an adhesive polymer, and the adhesive polymer is at least one of polyvinylidene fluoride, polyvinylpyrrolidone, vinylidene fluoride-hexafluoropropylene polymer, polyacrylonitrile, sodium carboxymethyl cellulose, sodium polyacrylate, polyacrylic acid, polyacrylate, styrene-butadiene copolymer, butadiene-acrylonitrile polymer, polyvinyl alcohol, polymethyl acrylate, polymethyl methacrylate, polyethyl acrylate and polyacrylic acid-styrene polymer.

More specifically, the separator is a water-based separator, and the adhesive layer includes an adhesive polymer, a binder and a dispersing agent, in which the content of the adhesive polymer is 92-96%, and the content of the binder is 2.5-5.5%, and the content of the dispersing agent is 1.5-2.5%; or, the separator is an oil-based mixed-coating separator, and the adhesive layer includes an adhesive polymer and ceramic particles, in which the content of the adhesive polymer is 30-50%, and the content of the ceramic particles is 50-70%; or, the separator is a pure oil-based separator, and the adhesive layer includes an adhesive polymer, and the adhesive polymer has a molecular weight of 0.3 to 1 million.

### BRIEF DESCRIPTION OF DRAWINGS

In order to illustrate the examples of this invention more clearly, the accompanying drawings that need to be used in the description of the examples or prior arts will be introduced briefly as following. Obviously, the accompanying drawings in the following description are only some examples of this invention. For those skilled in the art, other accompanying drawings can also be obtained from these accompanying drawings without any creative effort.
FIG. 1a and FIG. 1b are respectively SEM images of both surfaces of a water-based separator.
FIG. 2a and FIG. 2b are respectively SEM images of both surfaces of an oil-based separator.
FIG. 3 is a schematic diagram depicting core-pulling of a wound core.
FIG. 4 is a schematic diagram depicting poor spacing between tabs in a wound core.
FIG. 5 is a schematic diagram of an external structure of the wound core.
FIG. 6 is a schematic structural diagram of a lithium battery separator.
FIG. 7 is a schematic structural diagram of a positive electrode sheet of a lithium battery.
FIG. 8 is a schematic structural diagram of a negative electrode sheet of a lithium battery.
FIG. 9a is a schematic diagram depicting the winding of the separator and the positive and negative electrode sheets by a winding needle.
FIG. 9b is a schematic diagram of the winding needle after the needle is drawn out.
FIG. 10 is a schematic diagram depicting a mover wrapped with a separator sample.
FIG. 11 is a schematic diagram depicting a friction coefficient testing.
FIG. 12 is a schematic diagram showing a hot pressing treatment on a separator under a dry environment.
FIG. 13 is a schematic diagram showing a 90° peeling performed with an electronic universal testing machine.
FIG. 14 is an SEM image of a ceramic surface of an EJ oil-based separator 5 before a hot pressing without electrolyte.
FIG. 15 is an SEM image of a substrate surface of an EJ oil-based separator 1 before a hot pressing without electrolyte.
FIG. 16 is an SEM image of a ceramic surface of an EJ oil-based separator 5 after peeling, in which the EJ oil-based separator 5 is compounded by a hot pressing without electrolyte.
FIG. 17 is an SEM image of a ceramic surface of an EJ oil-based separator 6 after peeling, in which the EJ oil-based separator 6 is compounded by a hot pressing without electrolyte.
FIG. 18 is an SEM image of a substrate surface of an EJ oil-based separator 1 after peeling, in which the EJ oil-based separator 1 is compounded by a hot pressing without electrolyte.
FIG. 19 is an SEM image of a substrate surface of an EJ oil-based separator 2 after peeling, in which the EJ oil-based separator 2 is compounded by a hot pressing without electrolyte.
FIG. 20 is a cross-sectional view of a winding core.
FIG. 21 is a schematic diagram depicting electrolyte injection and separator sealing after the separator is placed into a laminated aluminum film.
FIG. 22 is a schematic diagram depicting hot pressing of a laminated aluminum film that is sealed.
FIG. 23 is a graph showing a cyclic test.

The specific embodiments of this invention will be described in further detail below with reference to the accompanying drawings.

### DESCRIPTION OF EMBODIMENTS

This invention will be described in detail below with reference to the accompanying drawings. When describing the embodiments of this invention in detail, for the convenience of explanation, the accompanying drawings representing a device structure will not be partially enlarged according to the general scale, and the schematic diagrams are only illustrative, which should not limit the protection scope of this invention. It should be noted that the accompanying drawings are in a simplified form and all use inaccurate scales, and are only used to facilitate and clearly assist explaining the purpose of the embodiments of this invention.

There is a friction force between objects that are in contact with each other, and the friction force between objects includes a kinetic friction force and a static friction force. The static friction force exists between two contact surfaces that are stationary relative to each other, and the kinetic friction force exists between two contact surfaces that are in motion relative to each other. In this invention, a friction coefficient is used as a performance parameter showing a roughness of a separator surface (coating) so as to identify the compatibility between different materials in advance, and select a suitable separator material based on the friction coefficient to prepare the cell, thereby improving the production yield of the lithium battery.

A friction coefficient formula is as follows: F=µFₚᵣₑₛₛᵤᵣₑ, where µ represents the friction coefficient, F represents a friction force, and F may correspond to a pulling force or a pushing force. Using the friction coefficient formula, the roughness of the separator surface (coating) is reflected by a static friction coefficient and a dynamic friction coefficient, which is easy to operate and has high accuracy. The friction coefficient is only related to a separator to be tested and the surface coating form of the separator to be tested, and has nothing to do with a positive pressure, a test speed, and a test tension during a test.

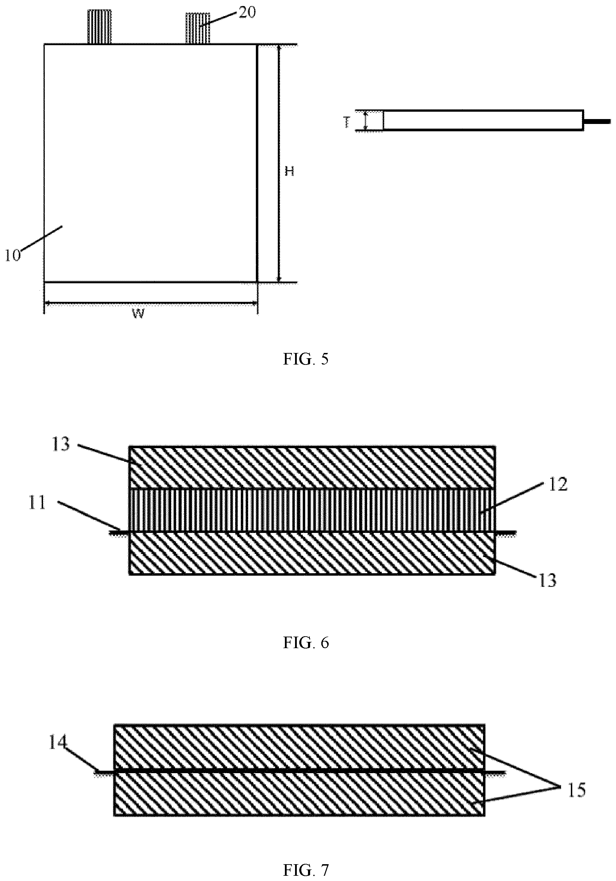

As shown in FIG. 5, a lithium battery generally includes a wound core 10 and tabs 20; the wound core 10 is formed by stacking a positive electrode sheet (first electrode sheet), a negative electrode sheet (second electrode sheet) and a separator together and then winding them; the separator is located between the positive electrode sheet and the negative electrode sheet; in FIG. 5, W represents the width of the wound core, H represents the length of the wound core, and T represents the thickness of the wound core. As shown in FIG. 6, the separator of the lithium battery includes a base film 11, a ceramic layer 12 provided on one or both sides of the base film 11, and an adhesive layer 13 located at the outermost layer of the separator. The separator shown in FIG. 6 has the ceramic layer 12 only provided on one surface of the base film 11 and the adhesive layer 13 provided on the other surface of the base film 11, and an outer surface of the ceramic layer 12 is also provided with the adhesive layer 13. The separator of this embodiment has a structure of the base film + single-layer ceramic layer + double-sided adhesive layer. A surface of the separator with both the ceramic layer and the adhesive layer is defined as a ceramic surface, and a surface of the separator only with the adhesive layer is defined as an adhesive surface or a substrate surface.

The base film may be a single-layer PE (polyethylene) film or a single-layer PP (polypropylene) film or a three-layer PP-PE-PP film structure, and a thickness of the base film may be 3 µm-20 µm. When only one side of the separator is provided with the ceramic layer, a thickness of the ceramic layer may be 0.5 µm-3 µm; and when both sides of the separator are provided with the ceramic layers, the thickness of the ceramic layer may be 0.5 µm-5 µm. The ceramic layer contains ceramic particles and an adhesive polymer, and the ceramic particles may be alumina, boehmite, magnesium oxide, and the adhesive polymer is at least one of polyvinylidene fluoride, polyvinylpyrrolidone, vinylidene fluoride-hexafluoropropylene polymer, polyacrylonitrile, sodium carboxymethyl cellulose, sodium polyacrylate, polyacrylic acid, polyacrylate, styrene-butadiene copolymer, butadiene-acrylonitrile polymer, polyvinyl alcohol, polymethyl acrylate, polymethyl methacrylate, polyethyl acrylate and polyacrylic acid-styrene polymer. In the ceramic layer, the content (mass percentage) of ceramic particles is 85-92%, with a balance of adhesive polymer. The particle size distribution of the ceramic particles is: D10 particle size being 0.15-0.3 µm, D50 particle size being 0.35-0.45 µm, D90 particle size being 0.6 -0.8 µm, D100 particle size being <4.5 µm,

The adhesive layer has a thickness of 0.5 µm-3 µm and a packing density of 0.6 g/m²-3.0 g/m², and the adhesive layer contains the adhesive polymer, and the adhesive polymer is at least one of polyvinylidene fluoride, polyvinylpyrrolidone, vinylidene fluoride-hexafluoropropylene polymer, polyacrylonitrile, sodium carboxymethyl cellulose, sodium polyacrylate, polyacrylic acid, polyacrylate, styrene-butadiene copolymer, butadiene-acrylonitrile polymer, polyvinyl alcohol, polymethyl acrylate, polymethyl methacrylate, polyethyl acrylate, and polyacrylic acid-styrene polymer. When the separator is a water-based separator, the adhesive layer includes the adhesive polymer, a binder and a dispersing agent, in which the content (mass percent) of the adhesive polymer is 92-96%, and the content of the binder is 2.5-5.5%, and the content of the dispersing agent is 1.5-2.5%. When the separator is an oil-based mixed-coating separator, the adhesive layer includes an adhesive polymer and ceramic particles, in which, the adhesive polymer has a content (mass percentage) of 30-50% and the content of the ceramic particles is 50-70%. When the separator is a pure oil-based separator, the content of the adhesive polymer in the adhesive layer is 100%, and the adhesive polymer has a molecular weight of 0.3 to 1 million.

As shown in FIG. 7, the positive electrode sheet of the lithium battery includes a positive electrode foil 14 and positive electrode active material layers 15 coated on both sides of the positive electrode foil 14. The positive electrode foil 14 may be an aluminum foil and have a thickness of 8 µm-14 µm. The positive electrode active material layer includes a positive electrode material, a conductive agent and a binder, and the positive electrode material may be one of LiCoO₂, LiNiO₂, LiFePO₄, LiMn₂O₄, and LiNiₓCo_{y}Mn_{1-x-y}O₂, and the conductive agent may be one or more of conductive carbon black, carbon nanotube, conductive graphite and graphene, and the binder may be one or more of polyvinylidene fluoride, vinylidene fluoride-fluorinated olefin copolymer, polytetrafluoroethylene, sodium carboxymethyl cellulose, styrene-butadiene rubber, polyurethane, fluorinated rubber and polyvinyl alcohol. In the positive electrode active material layer, the positive electrode material has a content (mass percentage) of 96-98.5%, and the conductive agent has a content of 0.5-2.5%, and the binder has a content of 1-1.5%.

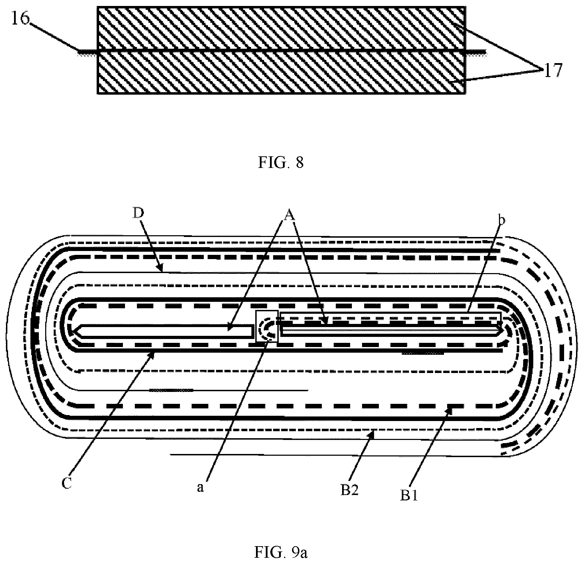

As shown in FIG. 8, the negative electrode sheet of the lithium battery includes a negative electrode foil 16 and negative electrode active material layers 17 coated on both sides of the negative electrode foil 16. The negative electrode foil 16 may be a copper foil, and have a thickness of 5 µm-10 µm. The negative electrode active material layer includes a negative electrode material, a conductive agent, a binder and a dispersing agent. The negative electrode material may be one or more of mesophase carbon microsphere, artificial graphite, natural graphite, hard carbon, soft carbon, lithium titanate, silicon-based material, tin-based material and lithium metal; and the conductive agent may be conductive carbon black, carbon nanotube, conductive graphite and graphene; the binder may be one or more of polyvinylidene fluoride, vinylidene fluoride-fluorinated olefin copolymer, polytetrafluoroethylene, sodium carboxymethyl cellulose, styrene-butadiene rubber, polyurethane, fluorinated rubber, and polyvinyl alcohol; and the dispersing agent may be sodium carboxymethyl cellulose or potassium carboxymethyl cellulose. In the negative electrode active material layer, the content (mass percentage) of the negative electrode material is 95-97%, and the content of the conductive agent is 1-2%, and the content of the binder is 1-1.5%, and the content of the dispersing agent is 0-1.5%.

As shown in FIG. 9a, during the preparation of the wound core, a winding needle A clamps heads of two layers of separators and drives the separators to rotate. In FIG. 9a, the thick dotted line represents a separator located at an inner side of the two layers of separators - an inner separator B1, where the inner separator B1 is in contact with the winding needle A; and the thin dotted line represents a separator located at an outer side of the two layers of separators - an outer separator B2, where the outer separator B2 is stacked on the outside of the inner separator B1 and not in direct contact with the winding needle A. During winding, the winding needle A will clamp the heads of the two layers of separators, and a part of each separator that is clamped by the winding needle is defined as a clamping section; and the clamping section of the inner separator B1 and the clamping section of the outer separator B2 are stacked together, for example, a part located in the wireframe a as shown in FIG. 9a. During the winding of separators, a part before first bending of the separators is defined as a first straight section, which is located behind the clamping section, and the first straight section of the inner separator B1 and the first straight section of the outer separator B2 is stacked together, for example, a part located in the wireframe b as shown in FIG. 9a. After the winding needle A drives the separators to rotate for half a circle, a negative electrode pressing roller (not shown) presses against a negative electrode sheet C (the thick solid line in FIG. 9a represents the negative electrode sheet), and the negative electrode sheet C is introduced by the separators and located between the inner separator B1 and the outer separator B2. After rotating further for half a circle, a positive electrode pressing roller (not shown) presses against a positive electrode sheet D (the thin solid line in FIG. 7a represents the positive electrode sheet), and the positive electrode sheet D is introduced along the separators, so that the positive electrode sheet D and the negative electrode sheet C are separated by the separators, and the early-stage winding action is completed. And then, the positive and negative electrode pressing rollers are retracted, and the positive and negative electrode sheets rotate with the rotation of the separators to obtain a wound core, forming a winding structure which has a layer of separator - a layer of negative electrode sheet - a layer of separator - a layer of positive electrode sheet. In addition, another winding process may also be used, that is, after the winding needle clamps the clamping section of the separators and rotates for half a circle, the positive and negative electrode sheets are simultaneously introduced to form a winding structure having a layer of separator - a layer of positive electrode sheet - a layer of separator - a layer of negative electrode sheet..

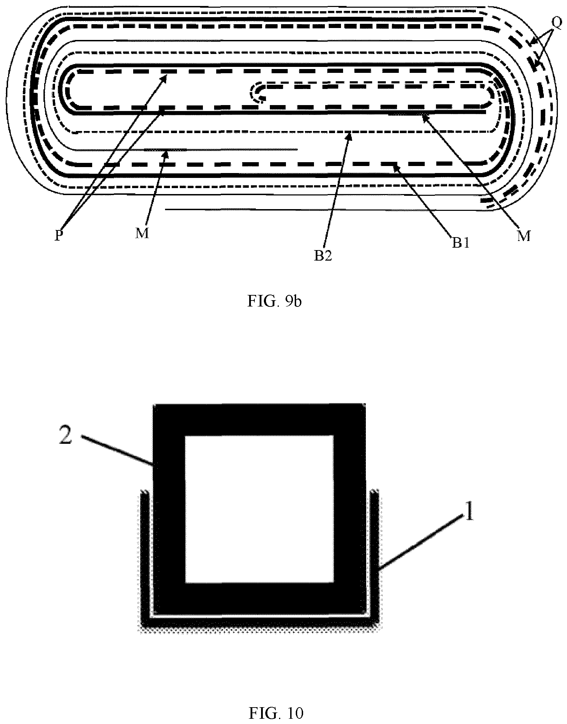

For the wound core of this embodiment, tails of the two layers of separators both extend beyond a tail of the positive electrode sheet, and the tails of the two layers of separators have a part overlapped and laminated together, in which end parts of the two layers of separators that extend beyond the positive electrode sheet and laminated together are each defined as a tail laminating section, for example, a part indicated by arrow Q as shown in FIG. 9b. When the winding needle A is drawn out, parts of the inner separator B1 that are in direct contact with the winding needle will be overlapped and contacted with each other together due to the drawing out of the winding needle; the parts of the inner separator B1 that overlap with each other after the winding needle A is drawn out are defined as a first inner laminating section, for example, parts as indicated by arrow P in FIG. 9b. A length of the first inner laminating section of the inner separator B1 is 30-60% of a width of the wound core.

The wound core shown in FIG. 9b has two structures. One structure is: a surface of the separator facing the winding needle is the ceramic surface, and the facing surfaces between the two adjacent separator layers are adhesive surfaces (the part in the wireframe a and the part in the wireframe b in FIG. 9a, and the part indicated by the arrow Q in FIG. 9b); after the winding needle is drawn out, the clamping section of the inner separator B1 will be opposite to the first straight section thereof, that is, the ceramic surface of the clamping section is opposite to the ceramic surface of the first straight section. Another structure is: the surface of the separator facing the winding needle is the adhesive surface, and the facing surfaces between the two adjacent separator layers are ceramic surfaces; after the winding needle is drawn out, the clamping section of the inner separator B 1 will be opposite to the first straight section thereof, that is, the adhesive surface of the clamping section is opposite to the adhesive surface of the first straight section. That is, in the two structures, the facing surfaces between the two adjacent separator layers are made of the same material, and the facing surfaces formed by the overlapping of the inner separator itself are also made of the same material. More specifically, a length of the clamping section of the separator (including the inner separator and the outer separator) is 1-15% of a width of the wound core, and a length of the first straight section of the separator (including the inner separator and the outer separator) is 40-50% of the width of the wound core, and the tail laminating section of the separator (including the inner separator and the outer separator) has a length of at least 5 mm, which is 0.1-10% of the width of the wound core. The thick short lines in FIG. 9a and FIG. 9b indicate the tab M.

Since the winding process of the wound core is carried out by introducing the positive and negative electrodes by the separator, that is, the inner separator is in direct contact with the winding needle, the surface roughness of the inner separator is very important. The surface of a part of the separator that is in direct contact with the winding needle should have a certain friction force or adhesive force to prevent sliding of the separator relative to the winding needle, thereby avoiding the spiral phenomenon of the wound core (the layers of the separator are not aligned) and the phenomena of core pulling of the wound core and poor spacing between tabs when the winding needle is drawn out.

The inventors found that based on the above structure (including the selection of separator materials, the setting of material components, and the arrangement of each layer structure of the separator), the surface of the separator has a specific friction coefficient. The separator is matched with the winding needle according to the friction coefficient of the surface of the separator. By selection of the separator material with appropriate fiction coefficient, production abnormalities such as core pulling or poor spacing between tabs due to the mismatching between the separator material and the winding needle material can be reduced during the winding process. The friction coefficient of the separator surface can be tested with a friction coefficient meter (MXD-01 friction coefficient meter is used for testing in the description of the following examples), and the steps are as follows.

S1: cutting a separator into a separator sample 1 with a suitable size, and wrapping the separator sample 1 around a surface of a mover 2 of the friction coefficient meter (FIG. 10), in which the separator sample 1 covers at least one surface of the mover 2, such as a bottom surface, and a surface of the separator sample 1 to be tested (that is, a coating surface) faces outward, preferably, the separator sample 1 fully covers the mover 2.

S2: spreading the material that is in direct contact with the separator, such as Teflon, on a surface of a measurement area 3 of the friction coefficient meter; in actual production, the surface of the winding needle is generally sprayed with Teflon material, and the commonly used Teflon material has a model of ASF-121FR. Therefore, the Teflon material with this model is available to measure the static friction coefficient (first friction coefficient) and dynamic friction coefficient (second friction coefficient) of the separator, so as to evaluate the matching degree between the separator and the winding needle (Teflon), and reduce production defects such as needle drawing.

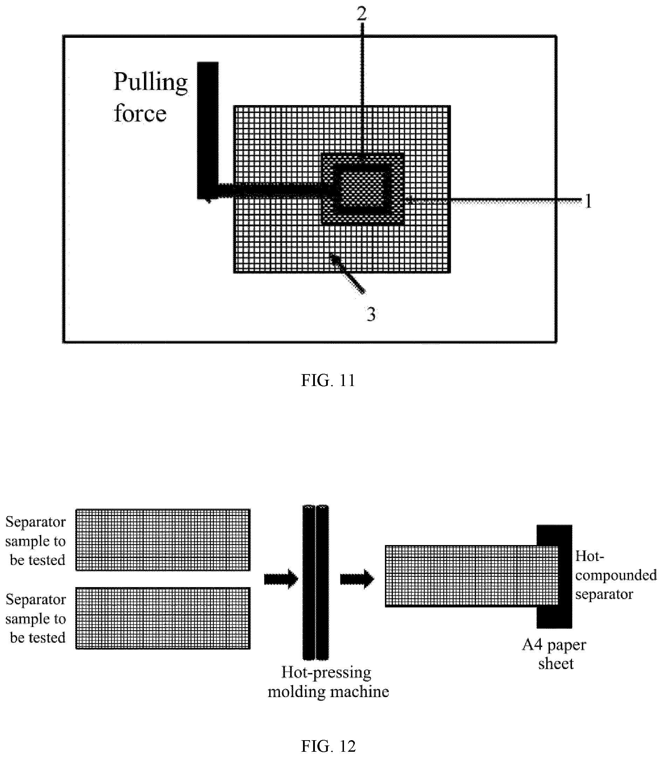

S3: placing the mover 2 wrapped with the separator sample 1 in the measurement area 3 of the friction coefficient meter, as shown in FIG. 11, in which the mover 2 has a weight of 200g in this example.

S4: turning on the friction coefficient meter, performing force accumulation for time t such as 15 s, gradually increasing pulling force, and measuring the first friction coefficient of the separator surface when the mover is pulled by the pulling force to move.

S5: allowing the mover to move at a constant speed after pulled, such as 100 mm/min, and measuring the second friction coefficient of the separator surface.

The first and second friction coefficients of the two sides of the separator can be obtained by testing the two sides of the separator (side A and side B) in turn.

The following table shows the test results of the two friction coefficient on 6 types of different water-based separators and 6 types of different oil-based separators, in which the coating of the separator surface has a packing density of 0.6 g/m²~3.0 g/m².

| Category | First friction coefficient | Second friction coefficient | Category | First friction coefficient | Second friction coefficient |
|---|---|---|---|---|---|
| Side A of water-based separator 1 | 0.235 | 0.184 | Side A of oil-based separator 1 | 0.157 | 0.112 |
| Side A of water-based separator 2 | 0.220 | 0.176 | Side A of oil-based separator 2 | 0.138 | 0.108 |
| Side A of water-based separator 3 | 0.215 | 0.173 | Side 3A of oil-based separator 3 | 0.149 | 0.107 |
| Side A of water-based separator 4 | 0.216 | 0.152 | Side A of oil-based separator 4 | 0.192 | 0.102 |
| Side A of water-based separator 5 | 0.195 | 0.150 | Side A of oil-based separator 5 | 0.172 | 0.117 |
| Side A of water-based separator 6 | 0.227 | 0.130 | Side A of oil-based separator 6 | 0.169 | 0.113 |
| Side B of water-based separator 1 | 0.236 | 0.224 | Side B of oil-based separator 1 | 0.156 | 0.148 |
| Side B of water-based separator 2 | 0.246 | 0.232 | Side B of oil-based separator 2 | 0.150 | 0.109 |
| Side B of water-based separator 3 | 0.238 | 0.211 | Side B of oil-based separator 3 | 0.165 | 0.120 |
| Side B of water-based separator 4 | 0.243 | 0.170 | Side B of oil-based separator 4 | 0.153 | 0.120 |
| Side B of water-based separator 5 | 0.194 | 0.156 | Side B of oil-based separator 5 | 0.164 | 0.127 |
| Side B of water-based separator 6 | 0.253 | 0.162 | Side B of oil-based separator 6 | 0.177 | 0.125 |

It can be seen from the above table that the first friction coefficient of the separator is mainly dependent on the physical properties between the coating surfaces of the water-based separator and of the oil-based separator and the Teflon, and the second friction coefficient evaluates the friction force between the separator and the Teflon during sliding. The second friction coefficients of the oil-based separators are all smaller than those of the water-based separators, indicating that the surfaces of the oil-based separators are relatively smooth. Therefore, in the case of the same Teflon material, compared with the use of the water-based separator, the use of the oil-based separator is more prone to the phenomena of core pulling and poor spacing.

The water-based separator 2, water-based separator 4, oil-based separator 4, and oil-based separator 5 are coordinated with the positive electrode sheet and the negative electrode sheet respectively to form a cell by winding. The surface of the winding needle is made of Teflon of model ASF-121FR, and the positive electrode sheet and the negative electrode sheet are conventional positive and negative electrode sheets. During the winding process, the side A of the water-based separator 2 is in contact with the winding needle, the side A of the water-based separator 4 is in contact with the winding needle, the side A of the oil-based separator 4 is in contact with the winding needle, and the side B of the oil-based separator 5 is in contact with the winding needle, in which the surface of the winding needle is made of Teflon material of model ASF-121FR. In addition, four kinds of separators are used as comparative examples: a water-based separator whose surface has the first friction coefficient of 0.35 and the second friction coefficient of 0.07, a water-based spray separator whose surface has the first friction coefficient of 0.733 and the second friction coefficient of 0.53, an oil-based separator whose surface has the first friction coefficient of 0.352 and the second friction coefficient of 0.051, and an oil-based mixed-coating separator whose surface has the first friction coefficient of 0.653 and the second friction coefficient of 0.457, which are coordinated with the same positive electrode sheet and negative electrode sheet to form a cell by winding. Then a quality inspection is performed on the 8 groups of cells obtained by winding to investigate whether the problems of core pulling or poor spacing between tabs occur. The quality inspection results are shown in the following table. In the table, W represents the width of the wound core, and H represents the width of the wound core (the size and structure of the wound core are as shown in FIG. 5).

| Separator | W/H | First friction coefficient | Second friction coefficient | Distance of core pulling | Spacing between tabs |
|---|---|---|---|---|---|
| Water-based | 2/3 | 0.220 | 0.176 | 0.1mm | Standard |
| separator 2 | | | | | |
| Water-based separator 4 | 1/3 | 0.216 | 0.152 | 0.0mm | Standard |
| Oil-based separator 4 | 1/4 | 0.192 | 0.102 | 0.05mm | Standard |
| Oil-based separator 5 | 4/3 | 0.164 | 0.127 | 0.0mm | Standard |
| Water-based separator | 1/3 | 0.350 | 0.070 | 1.0mm | Slightly small |
| Water-based spray separator | 4/3 | 0.733 | 0.530 | 2.0mm | Slightly small |
| Oil-based separator | 2/3 | 0.352 | 0.051 | 1.5mm | Slightly small |
| Oil-based mixed-coated separator | 1/4 | 0.653 | 0.457 | 1.3mm | Slightly small |

When the wound core has a thickness of 1mm - 10 mm, the relationship between the first friction coefficient of the separator and the core pulling of the wound core is shown in table below.

| W/H | First friction coefficient | Size of core pulling /amm |
|---|---|---|
| 0<W/H<1/2 | <0.1 | 0.5∼2mm |
| | 0.1∼0.4 | 0∼0.5mm |
| | >0.4 | 0.5∼1.5mm |
| 1/2<W/H<2 | <0.1 | 0.5∼3mm |
| | 0.1∼0.4 | 0∼0.5mm |
| | >0.4 | 0.5∼2mm |

It can be seen from the above results that when the first friction coefficient and the second friction coefficient of the separator surface are each in the range of 0.1-0.4, the contact between the separator surface and the Teflon surface are relatively matched, therefore, products with defects such as core pulling and poor spacing are not prone to appear.

When the second friction coefficient of the separator (relative to the Teflon surface) is less than 0.1, core pulling or poor tab spacing due to smooth adsorption are more likely to occur when the separator is in contact with the Teflon surface, and the core pulling will in turn lead to folding of internal separator; and there is a micro-short circuit inside the cell, which increases the ratio of low voltage and zero voltage (the ratio increases from 0.01% to about 2%). When the core pulling distance a is >0.5 mm, the wound core is in a scrapped state, and the tab spacing is also easily to be too small or too larger.

When the second friction coefficient of the separator is >0.4, the contact surface between the separator and Teflon is relatively rough, which is easy to lead to core pulling or poor tab spacing due to higher friction force. The core pulling will further lead to folding of internal separator; and there is a micro-short circuit inside the cell, which increases the ratio of low voltage and zero voltage (the ratio increases from 0.01% to about 1%). When the core pulling distance a is >0.5 mm, the wound core is in a scrapped state, and the tab spacing is also easily to be too small or too larger.

In the event that the friction coefficient of the separator surface is known, the separator or winding needle (Teflon) material with a higher or lower friction coefficient can be used according to the actual situation to match the separator with the winding needle material, and reduce the occurrence of core pulling, poor spacing, etc. during the winding process, thereby improving the winding quality and product yield.

According to the above test results, in this invention, the separator matched with the winding needle is selected according to the friction force of the separator surface. In the wound core of the lithium battery, the inner separator (the friction coefficient between the separator surface and the Teflon material) has a friction coefficient of 0.1 - 0.4 and further, such friction coefficient is the second friction coefficient. When the inner separator (the second friction coefficient between the separator surface and the Teflon material) has a second friction coefficient of 0.1-0.4, stability of the preparation process may be guaranteed.

In addition that the friction force of the separator surface will affect the core winding process and the quality of the finished product, the adhesive force of the separator surface (coating) will also have an impact on the core winding process and the quality of the finished product. If the adhesive force of the coating on the separator surface is not qualified, production defects such as folding of electrode sheet appear. The inventors have found that the separator based on the above composition and structure also has a specific peeling force, which reflects the adhesive force of the surface coating of the separator, and may be used to identify the bonding effect of the separator between the core layers, judge in advance whether the separator can meet the bonding requirements of the cell after hot pressing and formation, and identify the adhesion force between the main materials of the cell in advance. The separator material with specific peeling force may be selected to prepare the cell, so as to output batteries with better hardness and better performance.

The peeling force of the surface of the separator in this invention includes a dry peeling force and a wet peeling force. The two peeling forces are determined by different test methods. The dry peeling force will be described first below. In this invention, suitable separator material may also be selected with reference to the dry peeling force and/or the wet peeling force; and by controlling the dry peeling force and/or the wet peeling force of the separator, the yield of the wound core may be improved or the extent of hardness and softness of the cell after formation may be controlled.

The dry peeling force refers to a peeling force that is used for performing a 90° peeling after the separator is hot-pressed in an electrolyte-free environment, and the peeling force is the dry peeling force. The specific steps of dry peeling force test are as follows.

S1: the separator to be tested is cut into a separator sample with suitable size; for example, the separator to be tested is cut into a long strip with a certain width, such as a small strip with a width of 15 mm. Two cut pieces of separator samples to be tested are aligned and stacked, and a paper sheet is introduced at one end of stacked samples so as to separate the two pieces of separator samples to be tested.

S2: the two pieces of separator samples to be tested that are stacked are subjected to a hot-sealing treatment for laminated surfaces using a thermoplastic machine (FIG. 12); in this embodiment, the thermoplastic machine used has a model of SKY-325R6, and a hot pressing temperature is 100°C, a surface pressure is 0.2 MPa, and a hot pressing time is 10 s.

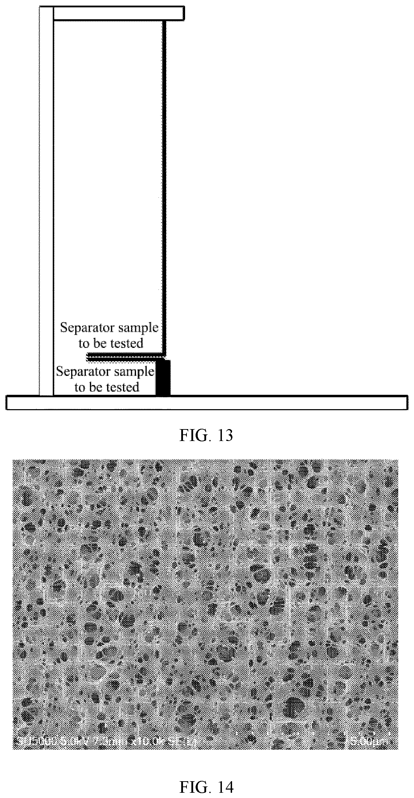

S3: after the hot pressing treatment is completed, the paper sheet that is clamped between the separator samples to be tested is pulled out, and the two pieces of separator samples to be tested that are pressed together are separated from the end and subjected to a 90° peeling, followed by recording the dry peeling force during the separation of the two pieces of separator samples to be tested; in this embodiment, an electronic universal testing machine is used to perform a 90° peeling test on the separator samples to be tested, in which one end of one piece of the separator sample to be tested is fixed with a moving end of the electronic universal testing machine, and one end of the other piece of separator sample to be tested is fixed with a fixing end of the electronic universal testing machine, and a preload speed and a test speed are set to 100 mm/min, and the two pieces of separator samples to be tested are separated (FIG. 13) and the peeling force during the separation of the separator samples to be tested is recorded.

This invention reflects the adhesion between the separator coatings by the dry peeling force, therefore, when the dry peeling force of the separators is tested, the separators with same material that are pressed together are separated, in which the two separators have the same coating, instead of using auxiliary materials with different surface materials such as quick-drying adhesive and double-sided tape, so that more accurate data on the adhesion force of the separator surface coatings may be obtained. In addition, the samples to be tested are pressed and compounded together by hot pressing, which is simple and quick to operate, and the 90° peel test is more convenient than a 180° peel test which requires the aid of other auxiliary materials.

The following table shows the results of dry peeling force testing on three different types of oil-based separators.

| EJ oil-based separator (26 m/min) | Adhesive surface (N/m) | Ceramic surface (N/m) | EJ oil-based separator (16 m/min) | Adhesive surface (N/m) | Ceramic surface (N/m) | Oil-based separator with large poles | Adhesive surface (N/m) | Ceramic surface (N/m) |
|---|---|---|---|---|---|---|---|---|
| EJ oil-based separator 1 | 18.4 | 12.1 | EJ oil-based separator 5 | 16.6 | 8.0 | Oil-based separator with large poles 1 | 3.9 | 3.8 |
| EJ oil-based separator 2 | 19.9 | 12.7 | EJ oil-based separator 6 | 18.3 | 10.7 | Oil-based separator with large poles 2 | 2.2 | 1.8 |
| EJ oil-based separator 3 | 18.1 | 11.8 | EJ oil-based separator 7 | 16.3 | 5.4 | Oil-based separator with large poles 3 | 3.9 | 2.8 |
| EJ oil-based separator 4 | 19.1 | 12.4 | EJ oil-based separator 8 | 15.4 | 9.4 | Oil-based separator with large poles 4 | 4.2 | 3.6 |
| Average | 18.88 | 12.25 | Average | 16.63 | 8.38 | Average | 3.55 | 2.95 |

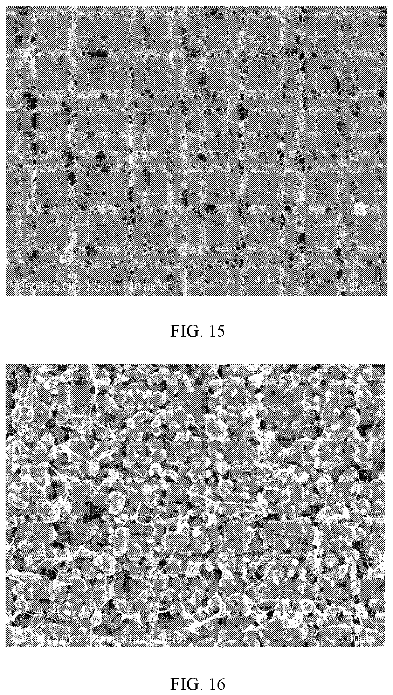

Five kinds of separators are selected from the above separators for which the dry peeling force has been tested, and wound together with the positive and negative electrode sheets to form a cell, packaged and then subjected to electrolyte injection, in which the separators used have a width of 83.8 mm, the positive electrode sheet has a width of 79.5 mm, the negative electrode sheet has a width of 81.5 mm, and both the positive electrode sheets and the negative electrode sheets are conventional types for lithium batteries. FIG. 14 and FIG. 15 are SEM images of the substrate surfaces of the EJ oil-based separator 5 and the EJ oil-based separator 1 before hot pressing, respectively. The SEM images of the substrate surfaces of the EJ oil-based separators 6-8 before hot pressing are similar to that of FIG. 14, and the SEM images of the substrate surfaces of the EJ oil-based separators 2-4 before hot pressing are similar to that of FIG. 15. For the cell obtained by the winding, part of each cell is subjected to quality inspection, including the folding of the separator and the peeling and transfer of the coating. The inspection results are shown in the following table. In the following table, the distance of electrode sheet covered by the separator refers to the over-covering size of the separator to the negative electrode sheet, which is used to prevent the short circuit inside the cell. In this invention, a transfer area is further used to determine the adhesive transfer performance during the dry peeling of the separator, as another performance parameter to select a suitable separator. Transfer area = transfer mass/separator area, in which transfer mass = mass of separator (to be tested) before dry peeling - mass of separator (to be tested) after dry peeling. Taking a separator with a width of 15 mm and a length of 150 mm as an example, the mass of the separator before dry peeling is 0.18 g, and the mass of the separator after dry peeling is 0.12 g, then the transfer area=0.06/0.00225=26.67; adhesive transfer ratio of separator = 0.06/0.18×100%=33% (the adhesive transfer ratio of separator = mass of separator (to be tested) before dry peeling- mass of separator (to be tested) after dry peeling/ mass of separator (to be tested) before dry peeling × 100%). If the transfer area is larger, the adhesiveness is greater, the adhesion between the electrode sheets of the cell and the separator is greater, and accordingly, the winding is more difficult, and the ratio of core pulling and poor spacing is larger, and the possibility of folding is more, and the battery has higher hardness.

| Separator type | Adhesive surface (N/m) | Ceramic surface (N/m) | Length/width of folding | Distance of electrode sheet covered by the separator | Adhesive transfer ratio of the separator |
|---|---|---|---|---|---|
| EJ oil-based separator 5 | 16.6 | 8.0 | Length 4.35mm | 2.3mm | 32% |
| | | | Width 0.2mm | | |
| EJ oil-based separator 8 | 15.4 | 9.4 | Length 3.52mm | 2.3mm | 38% |
| | | | Width 0.15mm | | |
| oil-based separator with large holes 1 | 3.9 | 3.8 | None | 2.3mm | 0% |
| EJ oil-based separator 1 | 18.4 | 12.1 | Length 6.87mm | 2.3mm | 68% |
| | | | Width 0.45mm | | |
| EJ oil-based separator 3 | 18.1 | 11.8 | Length 7.83mm | 2.3mm | 55% |
| | | | Width 0.35mm | | |

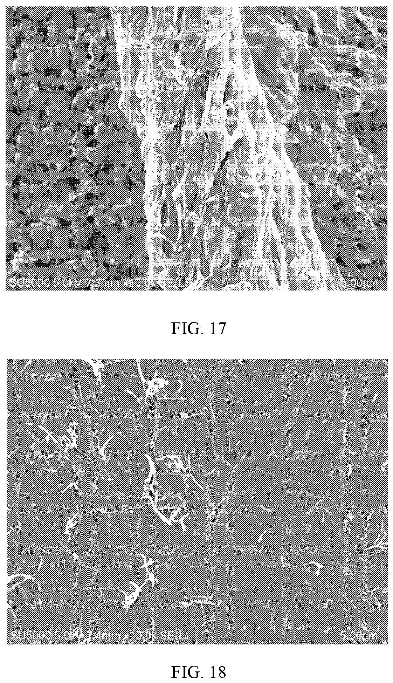

According to the sampling inspection results, for micro concave roll oil-based separator, when the dry peeling force of the separator ceramic surface is greater than 10 N/m, the folding of electrode sheet and empty foil is prone to appear in the wound core when winding during the winding process, and the folding phenomena of empty foil and electrode sheet is prone to appear during the hot-pressing or drying of the wound core, accounting for 80% or more. SEM images of the ceramic surface (the ceramic layer and the adhesive layer) and the substrate surface (the adhesive layer) of the separator are shown in FIG. 16 to FIG. 19 respectively, in which the phenomenon of peeling and transfer appears at the adhesive layer of each of the ceramic surface and the substrate surface of the separator, and the transfer area ratio reaches up to 40% -80%; and with the increase of the dry peeling force, the adhesive transfer ratio of separator and the transfer area increase. For a single piece of separator, the dry peeling force of the adhesive surface (substrate surface) is greater than that of the ceramic surface, so the dry peeling force of the ceramic surface may be used for reflecting the adhesion of separator material.

When the dry peeling force of the ceramic surface is in the range of 5 N/m-8 N/m, the proportion of electrode sheet and empty foil being folded occurred in the wound core decreases significantly when the cell is removed from the working table during the winding process, and the proportion of empty foil and folded electrode sheet occurred during the hot-pressing or drying of the wound core is obviously reduced to 30%. After a dry pressing, the ceramic surface and the substrate surface of the separator both show an effect of SEM images similar to FIG. 16 to FIG. 19; the phenomenon of peeling and transfer appears at the adhesive layer of the ceramic surface or the substrate surface of the separator, in which the transfer ratio is reduced to 20% to 40%.

When the dry peeling force of the ceramic surface is less than 5 N/m, the folding of the electrode sheet and the empty foil rarely occurs in the wound cell when the wound cell is removed from the working table during the winding process, and the phenomena of empty foil and folded electrode sheet rarely occur during the hot-pressing or drying of the wound core, and the ceramic surface and the substrate surface of the separator after peeling do not appear the effect of SEM images shown in FIG. 16 to FIG. 19.

To sum up, it can be seen that for the separator with a larger dry peeling force (surface adhesion force), when the dry peeling force is greater than 8 N/m, it cannot be used well in the winding process; when the dry peeling force is less than 8 N/m, the phenomenon of electrode sheet being folded has been improved; when the dry peeling force is less than 5 N/m, the separator is well used in the winding process, the manufacturing process of the wound core is stable, and the proportion of the electrode sheet being folded is relatively low, even low to 0. However, the separator with a larger adhesion force shows better bonding performance during hot pressing and formation in subsequent process, and realizes the bonding between the separators and the positive and negative electrode sheets. Accordingly, the battery has a better hardness, and the separators at the head and bottom of the wound core in the cell have a better contact adhesion during hot pressing and formation, and the internal short circuit caused by the contact of the positive and negative electrodes may be avoided when the cell is subjected to a furnace temperature test for the safety performance. However, if the electrode sheet or the separator is folded, the safety performance of the cell will be reduced.

Therefore, in order to avoid the problem that the electrode sheets are folded after winding, top & side sealing and baking, the separator may be selected according to the dry peeling force of the surface of the separator, for example, the dry peeling forces of the first straight section of the inner separator and the first straight section of the outer separator are each less than 8N/m in the wound core of the lithium battery, so as to improve the phenomenon of the electrode sheets being folded. By using the first straight section of the separator with a small dry peeling force, the phenomenon of the electrode sheets being folded is improved, without affect the bonding of other parts of the separator, so as to ensure the hardness of the battery. More preferably, the dry peeling force is the dry peeling force of the ceramic surface of the separator.

The wet peel force test is described below. The wet peeling force is determined by performing first hot pressing treatment on the separator in an electrolyte environment, and then performing a second hot pressing treatment on the separator in an electrolyte-free environment, and then performing a 90° peeling, in which the peeling force is the wet peeling force and can be used to reflect the adhesion performance of the coating on the separator surface after the adhesive of the separator is swollen The close-contact surface of the inner separator will swell and bond in the electrolyte environment, resulting in a more obvious adhesion effect between the separators, in which this adhesion force is mainly represented by a van der Waals force; and as the peeling force between the separators under the wet method gets greater, the adhesion effect between the separators is more obvious, and the tearing force is greater.

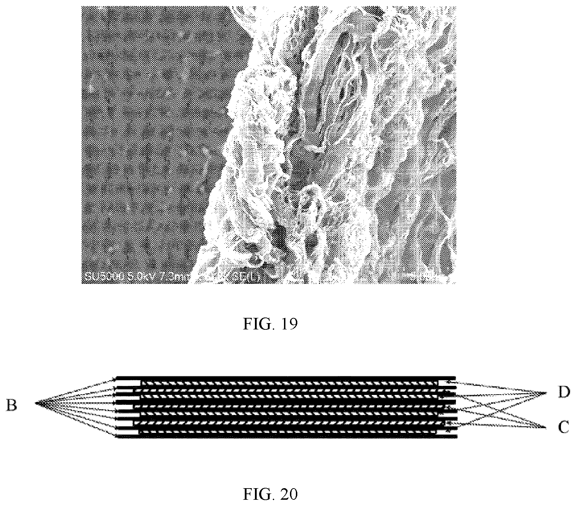

FIG. 20 is a cross-sectional view of the wound core. When the separator has a better adhesiveness in the electrolyte environment, the adjacent separator layers may be adhered to each other due to swelling in the process of forming the cell, which plays the role of bonding separators. As the adhesion force of the separator gets stronger, the bonding effect gets better, and the probability of short-circuit due to internal contact in the positive and negative electrode sheets becomes smaller when the cell is dropped, thereby increasing the safety performance of the cell. The inventors have found that the swelling-bonding force of the separator (that is also, the adhesion force of the adhesive coating on the separator surface after swelling of the separator under the electrolyte environment) plays the role of fixing the structure of the wound core, and suitable separator material may be selected based on the wet peeling force of the separator, so that the separator can play a good bonding effect and form a good bonding with the positive and negative electrode sheets, a battery with better hardness is formed, and the probability of cycle failure caused by excessive expansion of the cell in the subsequent cycle is reduced, which is conducive to prolong cycle life of the battery.

The specific steps of the wet peeling force test are as follows.

S1: the separator to be tested is cut into separator samples with suitable size; for example, the separator to be tested is cut into a long strip with a certain width, such as a small strip with a width of 15 mm. Two cut pieces of separator samples to be tested are aligned and stacked, and a paper sheet is introduced at one end of stacked samples so as to separate the two pieces of separator samples to be tested. For example, when the separator at the first inner laminating section is tested, the separators that are laminated together at the first inner laminating section are cut into samples, followed by aligning and stacking.

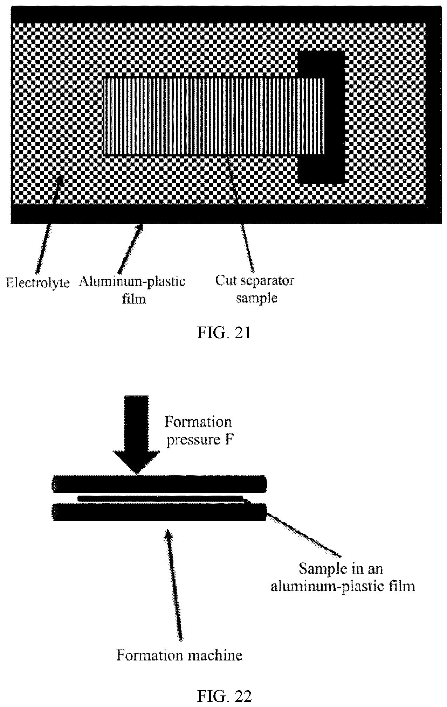

S2: placing the two separator samples to be tested that are stacked into a laminated aluminum film for packaging, and then injecting an electrolyte, such as 10 g electrolyte and then vacuuming and sealing (FIG. 21).

S3: subjecting the sealed laminated aluminum film to a hot-pressing treatment using a formation machine (FIG. 22) under a hot-pressing temperature of 68-90°C and a pressure of 0.7-1.1 MPa; in this embodiment, the hot-pressing temperature is 80°C, the hot-pressing pressure is 0.8 MPa, and the hot-pressing time is 2 h.

S4: removing the separator samples to be tested from the laminated aluminum film after the hot-pressing treatment is completed, wiping the electrolyte off the separator samples, placing the separator samples to be tested into a hard sealer, and performing a further hot-pressing treatment; in this embodiment, the hot-pressing molding machine used is SKY-325R6, and the hot-pressing temperature is 100°C, the hot-pressing pressure is 0.2 MPa, and the hot-pressing speed is 1 mm/s.

S5: pulling out the paper sheet clamped between the separator samples to be tested after the hot-pressing treatment is completed, and separating the two separator samples to be tested pressed together from one end of the separator samples, performing a 90° peeling, and recording the wet peeling force during the separation of the two separator samples to be tested; in this embodiment, an electronic universal testing machine is used to perform a 90° peeling test on the separator samples to be tested, where one end of one piece of the separator samples to be tested is fixed with a moving end of the electronic universal testing machine, and one end of the other piece of separator samples to be tested is fixed with a fixing end of the electronic universal testing machine, a preload speed and a test speed are set to be 100 mm/min, the two separator samples to be tested are separated, and the peeling force during the separation of the separator samples to be tested is recorded.

The table below shows the results of wet peeling force testing on 3 different types of separators.

| | Adhesive surface (N/m) | Ceramic surface (N/m) | | Ceramic surface & Adhesive surface (N/m) | | Adhesive surface (N/m) | Ceramic surface (N/m) |
|---|---|---|---|---|---|---|---|
| Oil-based separator 1 | 13.96 | 3.55 | Oil-based mixed-coating separator 1 | 11.58 | Water-based separator 1 | 2.92 | 1.82 |
| Oil-based separator 2 | 16.24 | 4.32 | Oil-based mixed-coating separator 2 | 12.78 | Water-based separator 2 | 2.25 | 1.68 |
| Oil-based separator 3 | 12.81 | 3.07 | Oil-based mixed-coating separator 3 | 12.76 | Water-based separator 3 | 3.26 | 1.53 |

Six kinds of separators are selected from the above separators tested for wet peeling force, wound together with the positive and negative electrode sheets to form a cell, and the cell was sealed and injected with the electrolyte, and performing formation to obtain a battery, in which the separators used have a width of 83.8 mm, and the positive electrode sheet has a width of 79.5 mm, and the negative electrode sheet has a width of 81.5 mm; and both the positive electrode sheet and the negative electrode sheet are conventional positive and negative electrode sheets for lithium batteries. At the same time, two kinds of existing separators are used to prepare batteries with the same positive and negative electrode sheets as comparative examples. The obtained battery is tested for hardness, thickness expansion rate and capacity retention rate, and the hardness test may be performed by a three-point hardness test method. The three-point hardness test method is as follows: as shown in FIG. 21, the bottom surface of the battery is supported by two steel pipes which are located at the two ends of the battery, and another steel pipe is placed against in the middle of the top surface of the battery; during the testing, a pressure is applied to the battery surface by the steel pipes, in which the test parameters are as follows: a limit displacement due to pushing deformation being 3 mm, and the pressing speed being 6 mm/min, and the pressure when the battery is deformed is the test result of hardness.

The test results of hardness, thickness expansion rate and capacity retention rate are shown in table below:

| | Adhesive surface (N/m) | Ceramic surface (N/m) | Hardness data of battery (N) | Thickness expansion rate /% | Capacity retention rate /% |
|---|---|---|---|---|---|
| Comparative example 1 | 1.83 | 0.79 | 189 | The battery becomes soft and is not placed on a working table. | |
| Comparative example 2 | 1.23 | 0.63 | 167 | The battery becomes soft and is not placed on the working table. | |
| Water-based | 2.92 | 1.82 | 271.37 | 12.2% | 70.49% (711 cycles) |
| separator 1 | | | | | |
| Water-based separator 2 | 2.25 | 1.68 | 265.68 | 11.3% | 79.86% (711 cycles) |
| Oil-based separator 1 | 13.96 | 3.55 | 434.64 | 9.3% | 85.32% (984 cycles) |
| Oil-based separator 2 | 16.24 | 4.32 | 486.13 | 9.5% | 84.23% (984 cycles) |
| Oil-based mixed-coated separator 1 | 11.58 | | 559.62 | 8.8% | 86.57% (984 cycles) |
| Oil-based mixed-coated separator 2 | 12.78 | | 596.08 | 9.0% | 85.45% (984 cycles) |

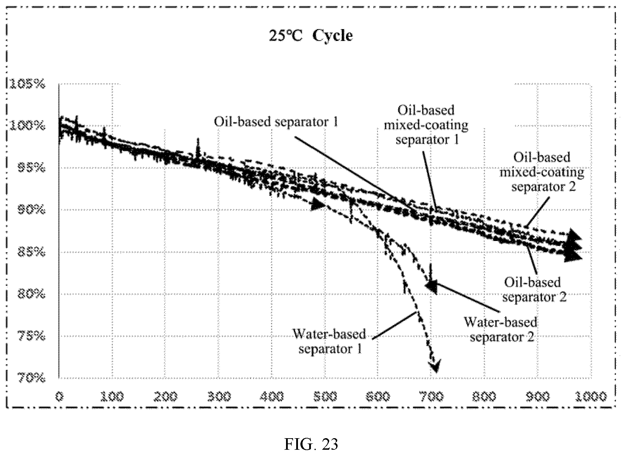

It can be seen from the above results that the adhesion forces (wet peeling forces) of the hot-pressed adhesive surface and ceramic surface after the water-based separator is swollen in the electrolyte environment are each smaller than those of the micro concave roll oil-based separator and the micro concave roll oil-based mixed-coating separator (wet peeling force), and the hardness data after the battery is removed from the working table may also indirectly reflect the adhesion effect between the separators, and the cycle characteristics of the battery may also reflect the current conclusions (FIG. 23). The adhesion force of the oil-based mixed-coating separator is better than that of the oil-based separator and the water-based separator, which indirectly proves the adhesion effect of the separator after the separator adhesive is swollen in the electrolyte environment; when the wet peeling force becomes larger, the subsequent cycle performance of the battery is relatively excellent, and the battery is also relatively hard, which has the possibility and performability of quantification. Based on the above tested hardness data of the batteries, the following conclusions can be drawn.

When the adhesive surface of the separator has a wet peeling force of <2 N/m and the ceramic surface of the separator has a wet peeling force of < 1 N/m, the overall battery is soft, and the overall hardness of the battery is <200 N.

When the adhesive surface of the separator has a wet peeling force of 2 N/m-10 N/m and the ceramic surface of the separator has a wet peeling force of 1 N/m-2 N/m, the overall hardness of the battery is 200 N-400 N.

When the adhesive surface of the separator has a wet peeling force of > 10 N/m and the ceramic surface of the separator has a wet peeling force of 2 N/m-10 N/m, the overall hardness of the battery is 400 N-550 N.

When the adhesive surface of the separator has a wet peeling force of > 10 N/m and the ceramic surface of the separator has a wet peeling force of > 10 N/m, the overall hardness of the battery is 550 N -800 N.

Based on the test results of hardness, thickness expansion rate and capacity retention rate, when the adhesive surface of the separator has the wet peeling force of ≥ 2 N/m and the ceramic surface of the separator has the wet peeling force of ≥ 1 N/m, the hardness and cycles of the battery prepared can meet a requirement of 500 cycles; as the peeling force of the separator gets stronger, the battery gets harder, the bonding effect between the electrode sheets and the separator becomes better; the hardness of the battery becomes greater, the long-term cycle ability and the capacity retention rate of the battery get better, and the thickness expansion rate decreases. Therefore, when the wound core is prepared, the separator may be selected according to the wet peeling force of the separator surface, in which the adhesive surface of the first inner laminating section of the inner separator has the wet peeling force of ≥ 2N/m and the ceramic surface of the first inner laminating section of the inner separator has the wet peeling force of ≥ 1N/m in the wound core of the lithium battery.

The above description of the disclosed embodiments enables those skilled in the art to achieve or use this invention. Various modifications to these embodiments will be obvious for those skilled in the art, and the generic principles defined herein may be implemented in other embodiments without departing from the spirit or scope of the invention. Therefore, this invention is not intended to be limited to the embodiments shown herein, but is to conform to the widest scope consistent with the principles and novel features disclosed herein.

## Claims

1. A lithium battery, comprising a wound core and tabs, **characterized in that** the wound core is formed by stacking and winding an inner separator, a first electrode sheet, an outer separator and a second electrode sheet, and the first electrode sheet and the second electrode sheet have opposite polarity;
the inner separator is located at the innermost layer of the wound core, and each of the inner separator and the outer separator has a clamping section, a first straight section connected with the clamping section and located behind the clamping section, a tail laminating section extending beyond a tail end of the first electrode sheet, wherein the first straight section is located in front of the first electrode sheet, and the tail laminating section is a separator end, the clamping section, the first straight section and the tail laminating section of the inner separator are respectively laminated with the clamping section, the first straight section and the tail laminating section of the outer separator, and the first inner laminating section of the inner separator has a surface friction coefficient of 0.1-0.4.

2. The lithium battery according to claim 1, **characterized in that** the surface friction coefficient is a first friction coefficient and/or a second friction coefficient determined by the following method:
S1: cutting a separator into a separator sample with a suitable size, and wrapping the separator sample around a surface of a mover;
S2: spreading material that is in direct contact with the separator on a measurement area;
S3: placing the mover wrapped with the separator sample in the measurement area, so as to make a surface of the separator sample to be measured in contact with the material on the measurement area;
S4: applying an external force to the mover, and measuring a first friction coefficient of the surface of the separator sample when the mover moves; and
S5: after the mover starts to move, measuring a second friction coefficient of the surface of the separator sample when the mover moves at a constant speed under the external force.

3. The lithium-ion battery according to claim 1, **characterized in that** the surface friction coefficient is a second friction coefficient between the separator and a Teflon.

4. The lithium battery according to claim 1, **characterized in that** each of the inner separator and the outer separator comprises a base film, a ceramic layer and an adhesive layer, a surface of the base film is provided with the ceramic layer or the adhesive layer, an outer surface of the ceramic layer is provided with the adhesive layer, a surface of the separator having both the ceramic layer and the adhesive layer is a ceramic surface, and at least one surface of each of the inner separator and the outer separator is the ceramic surface.

5. The lithium battery according to claim 4, **characterized in that** surfaces of the inner separator and of the outer separator that are opposite to each other on the clamping section, the first straight section and the tail laminating section are the ceramic surfaces.

6. The lithium battery according to claim 4, **characterized in that** each of the inner separator and the outer separator comprises a base film and an adhesive layer, and a surface of the base film on which the adhesive layer is disposed is an adhesive surface, and at least one surface of each of the inner separator and the outer separator is the adhesive surface.

7. The lithium battery according to claim 6, **characterized in that** surfaces of the inner separator and of the outer separator that are opposite to each other on the clamping section, the first straight section and the tail laminating section are the adhesive surfaces.

8. The lithium battery according to claim 1, **characterized in that** a length of the clamping section of the inner separator and a length of the clamping section of the outer separator are each 1-15% of a width of the wound core; and/or a length of the first straight section of the inner separator and a length of the first straight section of the outer separator are each 40-50% of the width of the wound core; and/or
a length of the tail laminating section of the inner separator and a length of the tail laminating section of the outer separator are each ≥ 5 mm; and/or a length of the tail laminating section of the inner separator and a length of the tail laminating section of the outer separator are each 0.1-10% of a width of the wound core.

9. The lithium battery according to claim 1, **characterized in that** a dry peeling force of the first straight section of the inner separator and a dry peeling force of the first straight section of the outer separator are each less than 8 N/m; and the dry peeling force is determined by the following method:
S1: cutting a separator to be tested into separator samples with suitable size and aligning and stacking two pieces of separator samples to be tested;
S2: subjecting stacked separator samples to be tested to hot-pressing under a temperature of 100°C and a pressure of 0.2 MPa for 10 s; and
S3: after the hot-pressing treatment is completed, separating the separator samples to be tested that are pressed together from one end of the separator samples to be tested, performing a 90° peeling, and recording a peeling force during separation of the separator samples to be tested, the peeling force being the dry peeling force.

10. The lithium battery according to claim 1, **characterized in that** the inner separator has a first inner laminating section, and the first inner laminating section of the inner separator is a part where the inner separator is laminated with itself, an adhesive surface of the first inner laminating section of the inner separator has a wet peeling force ≥ 2 N/m, and a ceramic surface of the first inner laminating section of the inner separator has a wet peeling force ≥ 1 N/m, and the wet peel force is determined by the following steps:
S1: cutting a separator to be tested into separator samples with suitable size, and aligning and stacking two pieces of separator samples to be tested;
S2: placing the two pieces of separator samples to be tested that are stacked into a laminated aluminum film for packaging, injecting an electrolyte, vacuuming and sealing;
S3: subjecting the sealed laminated aluminum film to a hot-pressing treatment using a formation machine under a temperature of 80°C and a pressure of 0.8 MPa for 2 h;
S4: removing the separator samples to be tested from the laminated aluminum film after the hot-pressing treatment is completed, wiping the electrolyte off the separator samples, placing the wiped separator samples into a hard sealer, and performing a further hot-pressing treatment under a temperature of 100°C and a pressure of 0.2 MPa for 10 s; and
S5: separating the two pieces of separator samples to be tested that are pressed together from one end of the separator samples after the further hot-pressing treatment is completed, performing a 90° peeling, and recording a peeling force during separation of the separator samples to be tested, in which the peeling force is called a wet peeling force.
